# FASCICULE DE BREVET EUROPEEN

(11) **EP 0 743 224 B1**
(45) Date de publication et mention de la délivrance du brevet: **23.06.1999**
(21) Numéro de dépôt: 96401058.1
(22) Date de dépôt: 14.05.1996
(51) Int. Cl.: B60N 2/48

(54) **Dispositif de réglage de la hauteur d'un appui-tête sur le dossier d'un siège**
Höhenverstelleinrichtung einer Kopfstütze über der Sitzrückenlehne
Device to adjust the height of a head-rest on the backrest of a seat

(30) Priorité: 16.05.1995 FR 9505781
(43) Date de publication de la demande: 20.11.1996
(73) Titulaire: MATRA AUTOMOBILE, 75116 Paris (FR)
(72) Inventeur: Faligand, Jacky, 78120 Rambouillet (FR); Peylaboud, Patrick, 78160 Le Perray en Yvelines (FR)
(74) Mandataire: Loisel, Bertrand

(56) Documents cités:
- EP-A- 0 678 418
- DE-A- 2 948 537
- DE-C- 3 818 018
- FR-A- 2 355 483
- US-A- 3 512 833
- US-A- 4 256 341
- US-A- 4 671 573

## Description

La présente invention concerne un dispositif pour régler la hauteur d'un appui-tête sur le dossier d'un siège, notamment d'un siège de véhicule automobile.

Il est souvent souhaitable que l'appui-tête d'un siège d'automobile puisse s'intégrer complètement, ou presque complètement, au dossier du siège. Une telle intégration permet notamment au conducteur d'avoir une meilleure vision vers l'arrière du véhicule lorsque le siège n'est pas occupé. Par ailleurs, s'il s'agit d'un siège amovible, par exemple pour un véhicule de type monospace, l'intégration de l'appui-tête au dossier confère au siège un moindre encombrement lorsqu'il est rangé replié dans le véhicule ou stocké en dehors du véhicule.

On connaît des dispositifs de réglage de la hauteur d'un appui-tête intégrable, comprenant au moins un support d'appui-tête coulissant par rapport au dossier entre une position basse et une position haute, l'appui-tête étant lui-même coulissant par rapport au support entre une position basse et une position haute, des moyens d'indexage élastiques étant prévus pour stabiliser certaines positions du support par rapport au dossier et de l'appui-tête par rapport au support. L'appui-tête est intégré au dossier lorsque à la fois le support et l'appui-tête sont en position basse. Les moyens d'indexage comprennent des liaisons à crémaillère sensiblement symétriques entre le dossier et le support d'une part, et entre le support et l'appui-tête d'autre part. Ces crémaillères définissent un certain nombre de positions de réglage de l'appui-tête, qui permettent d'adapter la hauteur de l'appui-tête au gabarit des occupants du véhicule. Un réglage fin de la hauteur de l'appui-tête est possible lorsque les positions stabilisées par les liaisons à crémaillère sont rapprochées les unes des autres. Un tel réglage fin est obtenu sur toute la hauteur de déplacement de l'appui-tête par rapport au dossier. Or, pour des raisons de sécurité, il n'est pas souhaitable d'admettre des positions de réglage proches de la position la plus basse de l'appui-tête par rapport au dossier. Des réglementations imposent d'ailleurs une hauteur minimale entre chaque position de réglage de l'appui-tête et un point de référence du siège, cette hauteur minimale étant nettement plus grande que la hauteur de l'appui-tête en position intégrée. Certains règlements imposent également une valeur minimale de la plus grande hauteur de réglage de l'appui-tête.

Un but de la présente invention est de permettre de s'adapter aux contraintes ci-dessus, à l'aide d'un dispositif de réglage à la fois simple à utiliser et relativement peu encombrant.

L'invention propose ainsi un dispositif de réglage du type indiqué ci-dessus, caractérisé en ce que les dits moyens d'indexage sont tels que le support d'appui-tête n'ait aucune position stabilisée par rapport au dossier entre sa position basse et sa position haute, que la position basse de l'appui-tête par rapport au support soit stabilisée de façon plus résistante, vis-à-vis du coulissement vers le haut, que la position basse du support par rapport au dossier, et que la position haute du support par rapport au dossier soit stabilisée de façon plus résistante, vis-à-vis du coulissement vers le bas, que chaque position stabilisée, autre que la position basse, de l'appui-tête par rapport au support.

Lorsque le support et l'appui-tête sont tous deux en position basse et que l'utilisateur commence à exercer une traction vers le haut sur l'appui-tête par rapport au dossier, le support coulisse sur toute sa course jusqu'à sa position haute par rapport au dossier, avant que l'appui-tête ait pu quitter sa position basse par rapport au support. L'appui-tête est alors dans sa position de réglage la plus basse par rapport au dossier, position qui peut être suffisamment haute par rapport à la position complètement rétractée puisqu'elle correspond à toute la course du support par rapport au dossier. En continuant à exercer une traction vers le haut, l'utilisateur pourra alors placer l'appui-tête à la hauteur désirée en profitant des positions indexées de l'appui-tête par rapport au support. Lorsque l'utilisateur pousse l'appui-tête vers le bas à partir d'une position de réglage, il ne peut désengager le support de sa position haute par rapport au dossier qu'après avoir ramené l'appui-tête à sa position la plus basse par rapport au support. L'utilisateur peut ainsi régler l'appui-tête à la hauteur désirée, sans jamais pouvoir le stabiliser en une position qui serait considérée comme trop basse au vu des règles de sécurité.

Il est intéressant de conserver la structure de type double crémaillère (l'une entre le dossier et le support et l'autre entre le support et l'appui-tête). Elle autorise une course globale importante de l'appui-tête entre sa position complètement rétractée et sa position complètement déployée, sans qu'on ait à prévoir des tiges de crémaillère correspondant à toute cette longueur et devant, en position rétractée, pénétrer entièrement soit dans le dossier, soit dans l'appui-tête, ce qui poserait des problèmes d'encombrement, notamment pour des sièges à dossier articulé. La structure à double crémaillère répartit cette longueur de coulissement entre le dossier et l'appui-tête, et facilite donc la mise en place du dispositif.

Dans une variante du dispositif de réglage reposant sur le même principe, suivant la revendication indépendante 4, les moyens d'indexage sont tels que l'appui-tête n'ait aucune position stabilisée par rapport au support entre sa position basse et sa position haute, que la position basse du support par rapport au dossier soit stabilisée de façon plus résistante, vis-à-vis du coulissement vers le haut, que la position basse de l'appui-tête par rapport au support, et que la position haute de l'appui-tête par rapport au support soit stabilisée de façon plus résistante, vis-à-vis du coulissement vers le bas, que chaque position stabilisée, autre que la position basse, du support par rapport au dossier. Cette variante consiste simplement à inverser les rôles des deux liaisons à crémaillère.

Un support d'appui-tête, utilisable dans l'une ou l'autre des deux formes de réalisation ci-dessus, comprend au moins une tige inférieure destinée à coulisser dans un premier élément de guidage fixé au dossier du siège et au moins une tige supérieure destinée à coulisser dans un second élément de guidage fixé à l'appui-tête, lesdites tiges étant pourvues d'entailles transversales réparties suivant leur longueur pour stabiliser certaines positions du support par rapport au dossier et de l'appui-tête par rapport au support par coopération avec des éléments élastiques d'indexage montés sur les premier et second éléments de guidage. Selon l'invention, un support d'appui-tête connu, du genre décrit ci-dessus, est caractérisé en ce qu'une première desdites tiges comporte une première entaille de position basse et une première entaille de position haute séparées par une portion sensiblement lisse, la première entaille de position basse étant plus proche de la seconde desdites tiges que la première entaille de position haute, la première entaille de position basse ayant, sur le côté dirigé vers la première entaille de position haute, un flanc incliné suivant un premier angle relativement à la direction de la première tige, et la première entaille de position haute ayant, sur le côté opposé à la première entaille de position basse, un flanc abrupt formant butée et, sur le côté dirigé vers la première entaille de position basse, un flanc incliné suivant un second angle relativement à la direction de la première tige, et en ce que la seconde tige comporte une seconde entaille de position basse et une seconde entaille de position haute, la seconde entaille de position basse étant plus proche de la première tige que la seconde entaille de position haute, la seconde entaille de position basse ayant, sur le côté opposé à la seconde entaille de position haute, un flanc abrupt formant butée et, sur le côté dirigé vers la seconde entaille de position haute, un flanc incliné suivant un troisième angle, plus grand que ledit premier angle, relativement à la direction de la seconde tige, et la seconde entaille de position haute ayant, sur le côté opposé à la seconde entaille de position basse, un flanc abrupt formant butée et, sur le côté dirigé vers la seconde entaille de position basse, un flanc incliné suivant un quatrième angle, plus petit que ledit second angle, relativement à la direction de la seconde tige.

D'autres particularités et avantages de la présente invention apparaîtront dans la description ci-après d'exemples de réalisation préférés mais non limitatifs, en référence aux dessins annexés, dans lesquels :
- les figures 1 et 2 sont des vues schématiques de face et de côté d'un support d'appui-tête selon l'invention;
- les figures 3 à 7 sont des vues latérales de différentes portions du support des figures 1 et 2 ; et
- les figures 8 à 10 sont trois vues de profil illustrant le réglage de la hauteur de l'appui-tête par rapport au dossier d'un siège.

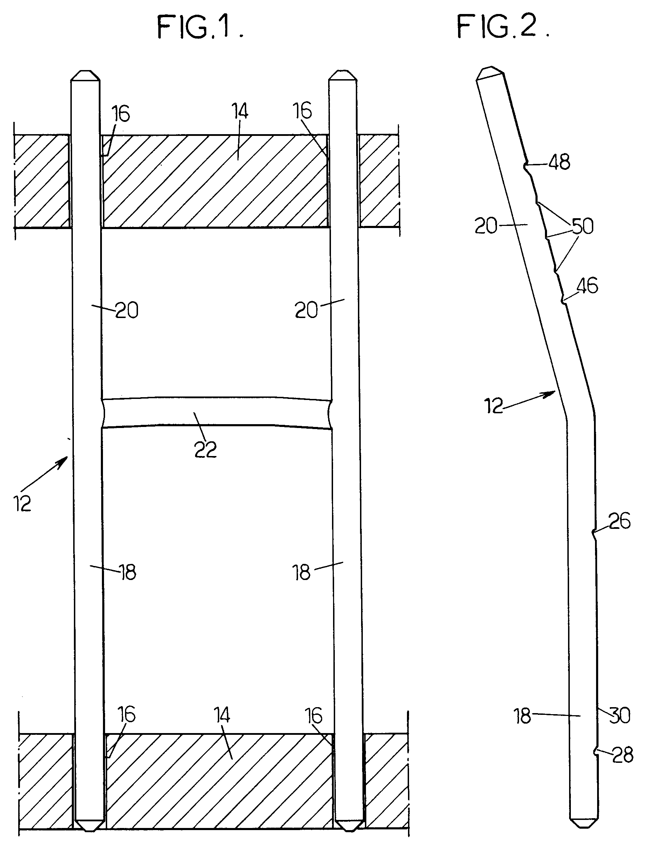

Le support d'appui-tête 12 représenté sur les figures 1 et 2 est prévu pour coopérer avec deux éléments de guidage 14 montés l'un sur le dossier du siège, et l'autre sur l'appui-tête. Chaque élément de guidage 14 comporte deux orifices cylindriques parallèles 16 pour recevoir deux tiges parallèles du support 12 en autorisant un coulissement vers le haut ou vers le bas.

Le support 12 comprend deux premières tiges désignées par la référence 18, et deux secondes tiges désignées par la référence 20. Chaque tige 18 se trouve sensiblement dans le prolongement d'une tige 20, avec un léger angle en vue de profil, comme le montre la figure 2. Au niveau de cet angle, les tiges sont reliées entre elles par une barre transversale 22, de sorte que le support a une forme générale en H comme le montre la figure 1.

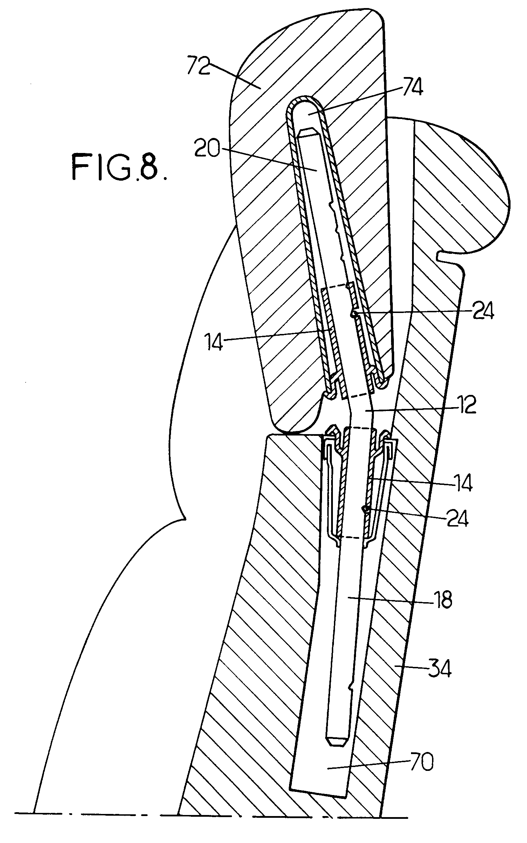

Des éléments élastiques d'indexage sont installés dans chacun des orifices 16 des éléments de guidage 14, de façon à coopérer avec des entailles transversales ménagées sur les tiges 18, 20 du support 12. Ces éléments élastiques d'indexage 24, non représentés sur les figures 1 et 2, mais visibles sur les figures 8 à 10, sont par exemple constitués par des épingles-ressort disposées autour des orifices cylindriques 16, faisant saillie dans ces orifices, et pouvant être repoussées élastiquement vers l'extérieur.

Les tiges 18 comportent chacune deux entailles 26, 28 séparées par une portion lisse 30 (figure 2). L'entaille 26 est appelée entaille de position basse, et l'entaille 28 est appelée entaille de position haute, bien que, lorsque le support 12 est positionné comme représenté sur les figures 8 à 10, l'entaille 26 soit située plus haut que l'entaille 28. La raison en est que, lorsque l'entaille 26 se trouve en face de l'élément élastique d'indexage (figure 8), le support 12 se trouve dans sa position basse par rapport au dossier 34, tandis qu'il se trouve dans sa position haute par rapport au dossier 34 lorsque l'entaille 28 se trouve en face de l'élément élastique d'indexage 24. L'entaille de position basse 26 de la tige 18 se définit comme étant plus proche de l'autre tige 20 que l'entaille de position haute 28.

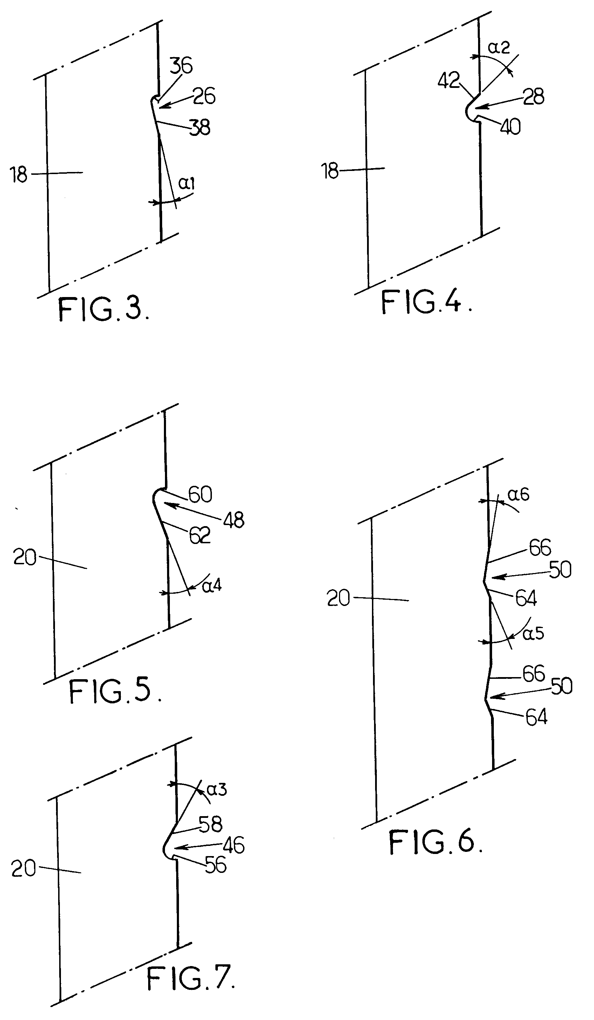

L'entaille de position basse 26 de la tige 18 est représentée de profil sur la figure 3. Sur son côté dirigé à l'opposé de l'entaille de position haute 28, elle présente un flanc abrupt 36 formant butée de position basse. Sur son côté dirigé vers l'entaille de position haute 28, elle présente un flanc 38 incliné par rapport à la direction de la tige 18 selon un angle α1 qui est par exemple de l'ordre de 10°.

L'entaille de position haute 28 de la tige 18 est représentée de profit sur la figure 4. Sur son côté dirigé à l'opposé de l'entaille de position basse 26, elle présente un flanc abrupt 40 formant butée de position haute. Sur son côté dirigé vers l'entaille de position basse 26, elle présente un flanc 42 incliné par rapport à la direction de la tige 18 selon un angle α2 qui est par exemple de l'ordre de 45°.

L'autre tige 20 du support 12 comporte également une entaille de position basse 46 et une entaille de position haute 48, l'entaille de position basse 46 étant plus proche de la tige 18 que l'entaille de position haute 48. Entre ces deux entailles 46 et 48, la tige 20 comporte en outre des entailles intermédiaires 50 (trois dans l'exemple représenté).

L'entaille de position basse 46 de la tige 20 est représentée de profil sur la figure 7. Sur son côté dirigé à l'opposé de l'entaille de position haute 48, elle présente un flanc abrupt 56 formant butée de position basse. Sur son côté dirigé vers l'entaille de position haute 48, elle présente un flanc 58 incliné par rapport à la direction de la tige 20 selon un angle α3 qui est par exemple de l'ordre de 30°.

L'entaille de position haute 48 de la tige 20 est représentée de profil sur la figure 5. Sur son côté dirigé à l'opposé de l'entaille de position basse 46, elle présente un flanc abrupt 60 formant butée de position haute. Sur son côté dirigé vers l'entaille de position basse 46, elle présente un flanc 62 incliné par rapport à la direction de la tige 20 selon un angle α4 qui est par exemple de l'ordre de 20°.

Des entailles intermédiaires 50 de la tige 20 sont représentées de profil sur la figure 6. Sur leurs côtés dirigés vers l'entaille de position basse 46, elles présentent chacune un flanc 64 incliné par rapport à la direction de la tige 20 selon un angle α5 qui est par exemple de l'ordre de 20°. Sur leurs côtés dirigés vers l'entaille de position haute 48, elles présentent chacune un flanc 66 incliné par rapport à la direction de la tige 20 selon un angle α6 qui est par exemple de l'ordre de 10°.

Les figures 8 à 10 illustrent l'installation du support d'appui-tête 12 sur un siège de véhicule automobile. L'un des éléments de guidage 14 est fixé au dossier 34 à la partie supérieure d'un logement 70 prévu pour recevoir les tiges inférieures du support 12. L'autre élément de guidage 14 est fixé à l'appui-tête 72 à la partie inférieure d'un logement 74 prévu pour recevoir les tiges supérieures du support 12.

Dans l'agencement représenté sur les figures 8 à 10, ce sont les tiges 18 du support 12 qui constituent les tiges inférieures, et les tiges 20 constituent les tiges supérieures.

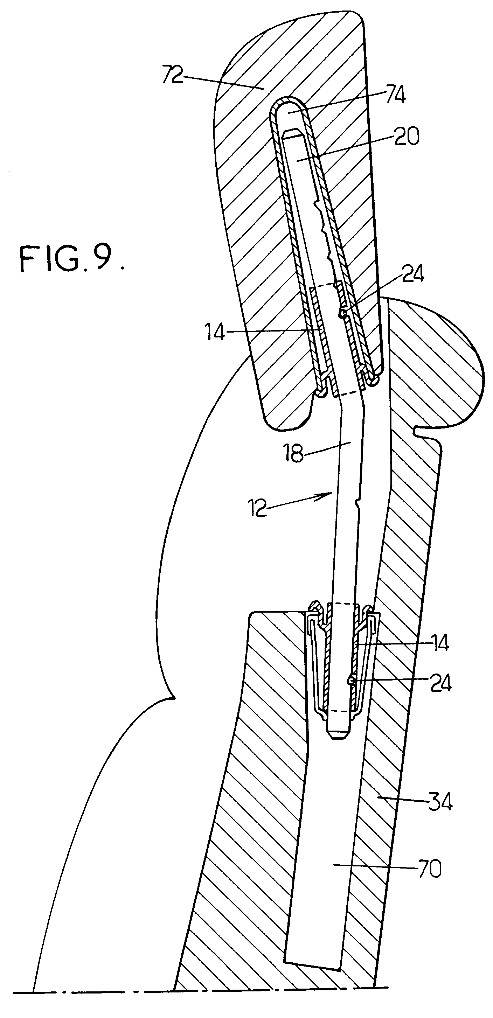

Dans la position complètement rétractée illustrée sur la figure 8, où l'appui-tête 72 est pratiquement intégré au dossier 34, les éléments d'indexage 24 se trouvent dans les entailles de position basse 26, 46 des tiges 18, 20. La position basse de l'appui-tête par rapport au support 12 est stabilisée de façon plus résistante, vis-à-vis du coulissement vers le haut, que la position basse du support par rapport au dossier, étant donné que l'angle α3 est plus grand que l'angle α1. Ainsi, lorsque l'utilisateur tire l'appui-tête 72 vers le haut à partir de la position de la figure 8, le support 12 commence par coulisser par rapport au dossier 34 avant que l'appui-tête 72 ne se déplace par rapport au support 12. Lors de ce coulissement du support par rapport au dossier, aucune position stabilisée n'est rencontrée avant la position haute correspondant à l'entaille 28. Lorsque cette entaille 28 est atteinte, l'appui-tête a la position illustrée sur la figure 9. Cette position est la première position de réglage de l'appui-tête par rapport au dossier. L'appui-tête a alors une position nettement écartée de sa position complètement rétractée, à une hauteur compatible avec les règles de sécurité.

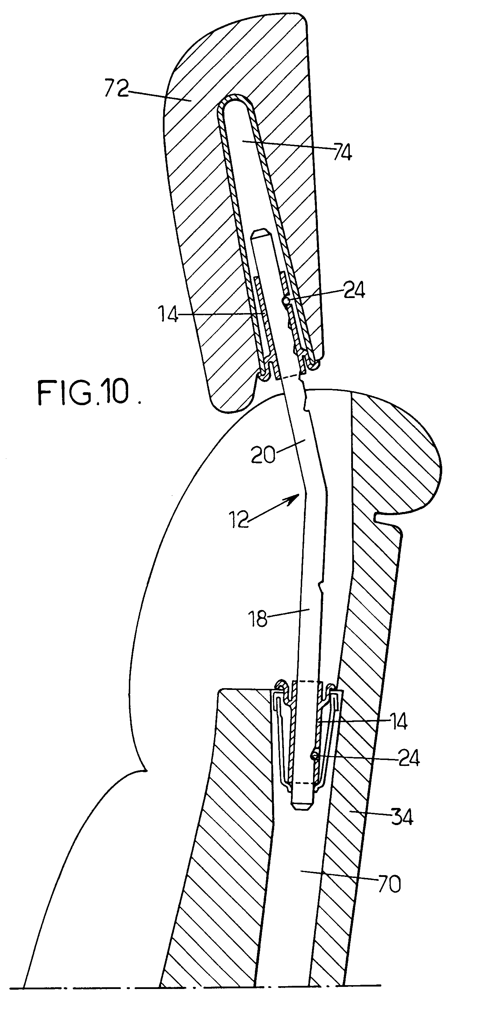

Lorsque l'utilisateur continue à tirer l'appui-tête 72 vers le haut à partir de la position de la figure 9, le support 12 ne peut plus coulisser par rapport au dossier 34 à cause du flanc abrupt 40 de l'entaille de position haute 28 de la tige 18. L'appui-tête 72 commence alors à coulisser vers le haut par rapport au support 12. L'appui-tête peut alors prendre l'une des positions de réglage stabilisée par les entailles intermédiaires 50. Néanmoins, comme l'angle α6 est plus petit que l'angle α3, lorsque l'utilisateur a exercé une traction suffisante pour vaincre la pente α3 de l'entaille de position basse 46, l'appui-tête 72 a tendance à coulisser jusqu'à sa position haute correspondant à l'entaille 48 sans s'arrêter aux positions correspondant aux entailles intermédiaires 50. L'appui-tête a alors la position représentée sur la figure 10. Cette position est suffisamment haute pour que le siège puisse être confortablement occupé par une personne de grande taille.

La position haute du support par rapport au dossier est stabilisée de façon plus résistante, vis-à-vis du coulissement vers le bas, que la position haute de l'appui-tête par rapport au support et que chacune des positions intermédiaires, étant donné que l'angle α2 est plus grand que les angles α4 et α5. Lorsque l'utilisateur fait descendre l'appui-tête par rapport au dossier, par exemple en tapotant à son extrémité supérieure, l'appui-tête commence donc par coulisser vers le bas par rapport au support avant que te support ne quitte sa position haute. L'utilisateur peut alors choisir la position de réglage qu'il souhaite. A la fin de cette course, l'appui-tête reprend la position illustrée sur la figure 9. Si l'utilisateur poursuit sa poussée vers le bas, l'appui-tête revient vers sa position illustrée sur la figure 8 sans rencontrer une autre position de réglage.

La manipulation de l'appui-tête est donc extrêmement simple sans qu'un réglage à une position trop basse soit possible en conditions normales d'utilisation. Pour masquer le support 12 lorsque l'appui-tête n'est pas complètement rétracté, on peut prévoir de l'entourer, entre les éléments de guidage 14, par un tissu élastique d'habillage, à la manière d'une chaussette.

On notera qu'un fonctionnement analogue et symétrique est obtenu lorsqu'on place le support 12 de façon que ses tiges 20 soient les tiges inférieures coulissant dans le dossier 34 et que ses tiges 18 soient les tiges supérieures coulissant dans l'appui-tête 72. La première partie de la course vers le haut est alors le coulissement de l'appui-tête par rapport au support (sans rencontrer de position de réglage), et la seconde partie de la course vers le haut est le coulissement du support par rapport au dossier, avec les positions intermédiaires de réglage.

Par ailleurs, il va de soi que les moyens d'indexage du coulissement de l'appui-tête par rapport au support et du support par rapport au dossier peuvent revêtir des formes très diverses autres que les liaisons à crémaillère décrites ci-dessus.

## Revendications

1. Dispositif de réglage de la hauteur d'un appui-tête (72) sur le dossier (34) d'un siège, comprenant au moins un support d'appui-tête (12) coulissant par rapport au dossier (34) entre une position basse et une position haute, l'appui-tête étant lui-même coulissant par rapport au support (12) entre une position basse et une position haute, des moyens d'indexage élastique (24,26,28,46,48,50) étant prévus pour stabiliser certaines positions du support par rapport au dossier et de l'appui-tête par rapport au support, caractérisé en ce que les dits moyens d'indexage sont tels que le support (12) n'ait aucune position stabilisée par rapport au dossier (34) entre sa position basse et sa position haute, que la position basse de l'appui-tête (72) par rapport au support soit stabilisée de façon plus résistante, vis-à-vis du coulissement vers le haut, que la position basse du support par rapport au dossier, et que la position haute du support par rapport au dossier soit stabilisée de façon plus résistante, vis-à-vis du coulissement vers le bas, que chaque position stabilisée, autre que la position basse, de l'appui-tête par rapport au support.

2. Dispositif selon la revendication 1, caractérisé en ce que les moyens d'indexage (24,50) stabilisent au moins une position intermédiaire de l'appui-tête (72) par rapport au support (12) entre ses positions basse et haute, chaque position intermédiaire étant stabilisée de façon moins résistante, vis-à-vis du coulissement vers le bas, que la position haute du support par rapport au dossier (34).

3. Dispositif selon la revendication 2, caractérisé en ce que chaque position intermédiaire est stabilisée par les moyens d'indexage (24,50) de façon moins résistante, vis-à-vis du coulissement vers le haut, que la position basse de l'appui-tête (72) par rapport au support (12).

4. Dispositif de réglage de la hauteur d'un appui-tête (72) sur le dossier (34) d'un siège, comprenant au moins un support d'appui-tête (12) coulissant par rapport au dossier (34) entre une position basse et une position haute, l'appui-tête étant lui-même coulissant par rapport au support (12) entre une position basse et une position haute, des moyens d'indexage élastique (24,26,28,46,48,50) étant prévus pour stabiliser certaines positions du support par rapport au dossier et de l'appui-tête par rapport au support, caractérisé en ce que les dits moyens d'indexage sont tels que l'appui-tête (72) n'ait aucune position stabilisée par rapport au support (12) entre sa position basse et sa position haute, que la position basse du support (12) par rapport au dossier (34) soit stabilisée de façon plus résistante, vis-à-vis du coulissement vers te haut, que la position basse de l'appui-tête par rapport au support, et que la position haute de l'appui-tête par rapport au support soit stabilisée de façon plus résistante, vis-à-vis du coulissement vers le bas, que chaque position stabilisée autre que la position basse, du support par rapport au dossier.

5. Dispositif selon la revendication 4, caractérisé en ce que les moyens d'indexage (24,50) stabilisent au moins une position intermédiaire du support (12) par rapport au dossier (34) entre ses positions basse et haute, chaque position intermédiaire étant stabilisée de façon moins résistante, vis-à-vis du coulissement vers le bas, que la position haute de l'appui-tête (72) par rapport au support.

6. Dispositif selon la revendication 5, caractérisé en ce que chaque position intermédiaire est stabilisée par les moyens d'indexage (24,50) de façon moins résistante, vis-à-vis du coulissement vers le haut, que la position basse du support (12) par rapport au dossier (34).

7. Dispositif selon l'une quelconque des revendications 1 à 6, caractérisé en ce que les moyens d'indexage comprennent d'une part au moins un élément élastique d'indexage (24), monté sur un premier élément de guidage (14) fixé au dossier (34), et coopérant avec des entailles ménagées dans une tige inférieure appartenant au support (12) et coulissant dans le premier élément de guidage, et d'autre part au moins un autre élément élastique d'indexage (24), monté sur un second élément de guidage (14) fixé à l'appui-tête (72), et coopérant avec des entailles ménagées dans une tige supérieure appartenant au support et coulissant dans le second élément de guidage.

8. Support d'appui-tête (12), comprenant au moins une tige inférieure destinée à coulisser dans un premier élément de guidage (14) fixé au dossier (34) d'un siège et au moins une tige supérieure destinée à coulisser dans un second élément de guidage (14) fixé à l'appui-tête (72), lesdites tiges étant pourvues d'entailles transversales réparties suivant leur longueur pour stabiliser certaines positions du support par rapport au dossier et de l'appui-tête par rapport au support par coopération avec des éléments élastiques d'indexage (24) montés sur les premier et second éléments de guidage, caractérisé en ce qu'une première desdites tiges (18) comporte une première entaille de position basse (26) et une première entaille de position haute (28) séparées par une portion sensiblement lisse (30), la première entaille de position basse étant plus proche de la seconde desdites tiges que la première entaille de position haute, la première entaille de position basse (26) ayant, sur le côté dirigé vers la première entaille de position haute, un flanc (38) incliné suivant un premier angle (α1) relativement à la direction de la première tige, et la première entaille de position haute (28) ayant, sur le côté opposé à la première entaille de position basse, un flanc abrupt (40) formant butée et, sur le côté dirigé vers la première entaille de position basse, un flanc (42) incliné suivant un second angle (α2) relativement à la direction de la première tige, en ce que la seconde tige (20) comporte une seconde entaille de position basse (46) et une seconde entaille de position haute (48), la seconde entaille de position basse étant plus proche de la première tige que la seconde entaille de position haute, la seconde entaille de position basse (46) ayant, sur le côté opposé à la seconde entaille de position haute, un flanc abrupt (56) formant butée et, sur le côté dirigé vers la seconde entaille de position haute, un flanc (58) incliné suivant un troisième angle (α3) relativement à la direction de la seconde tige, et la seconde entaille de position haute (48) ayant, sur le côté opposé à la seconde entaille de position basse, un flanc abrupt (60) formant butée et, sur le côté dirigé vers la seconde entaille de position basse, un flanc (62) incliné suivant un quatrième angle (α4) relativement à la direction de la seconde tige, en ce que ledit troisième angle (α3) est plus grand que ledit premier angle (α1), et en ce que ledit quatrième angle (α4) est plus petit que ledit second angle (α2).

9. Support d'appui-tête selon la revendication 8, caractérisé en ce que la seconde tige (20) comporte au moins une entaille intermédiaire (50) entre la seconde entaille de position basse (46) et la seconde entaille de position haute (48), et en ce que chaque entaille intermédiaire (50) a, sur le côté dirigé vers ta seconde entaille de position basse, un flanc (64) incliné suivant un cinquième angle (α5), plus petit que ledit second angle (α2), relativement à la direction de la seconde tige.

10. Support d'appui-tête selon la revendication 9, caractérisé en ce que chaque entaille intermédiaire (50) a, sur le côté dirigé vers la seconde entaille de position haute (48), un flanc (66) incliné suivant un sixième angle (α6), plus petit que ledit troisième angle (α3), relativement à la direction de la seconde tige (20).

## Claims

1. A system for adjusting the height of a headrest (72) on the back (34) of a seat, comprising at least one headrest support (12) sliding relative to the seat back (34) between a low position and a high position, the headrest itself being slidable relative to the support (12) between a low position and a high position, elastic indexing means (24, 26, 28, 46, 48, 50) being provided to stabilise certain positions of the support relative to the seat back and of the headrest relative to the support, characterised in that the said indexing means are such that the support (12) has no stabilised position relative to the seat back (34) between its low position and its high position, that the low position of the headrest (72) relative to the support is stabilised more resistantly with respect to the upward sliding than the low position of the support relative to the seat back, and that the high position of the support relative to the seat back is stabilised more resistantly, with respect to downward sliding, than each stabilised position, other than the low position, of the headrest relative to the support.

2. A system according to claim 1, characterised in that the indexing means (24, 50) stabilise at least one intermediate position of the headrest (72) relative to the support (12) between its low and high positions, each intermediate position being stabilised less resistantly, with respect to downward sliding, than the high position of the support relative to the seat back (34).

3. A system according to claim 2, characterised in that each intermediate position is stabilised by the indexing means (24, 50) less resistantly, with respect to upward sliding, than the low position of the headrest (72) relative to the support (12).

4. A system for adjusting the height of a headrest (72) on the back (34) of a seat, comprising at least one headrest support (12) sliding relative to the seat back (34) between a low position and a high position, the headrest itself being slidable relative to the support (12) between a low position and a high position, elastic indexing means (24, 26, 28, 46, 48, 50) being provided to stabilise certain positions of the support relative to the seat back and of the headrest relative to the support, characterised in that the said indexing means are such that the headrest (72) has no stabilised position relative to the support (12) between its low position and its high position, that the low position of the support (12) relative to the seat back (34) is stabilised more resistantly, with respect to upward sliding, than the low position of the headrest relative to the support, and that the high position of the headrest relative to the support is stabilised more resistantly, with respect to downward sliding, than each stabilised position, other than the low position, of the support relative to the seat back.

5. A system according to claim 4, characterised in that the indexing means (24, 50) stabilise at least one intermediate position of the support (12) relative to the seat back (34) between its low and high positions, each intermediate position being stabilised less resistantly, with respect to downward sliding, than the high position of the headrest (72) relative to the support.

6. A system according to claim 5, characterised in that each intermediate position is stabilised by the indexing means (24, 50) less resistantly, with respect to upward sliding, than the low position of the support (12) relative to the seat back (34).

7. A system according to any one of claims 1 to 6, characterised in that the indexing means comprise on the one hand at least one elastic indexing element (24) mounted on a first guide element (14) fixed to the seat back (34) and cooperating with notches formed in a lower rod belonging to the support (12) and sliding in the first guide element, and on the other hand at least one other elastic indexing element (24) mounted on a second guide element (14) fixed to the headrest (72) and co-operating with notches formed in an upper rod belonging to the support and sliding in the second guide element.

8. A headrest support (12) comprising at least one lower rod intended to slide in a first guide element (14) fixed to the back (34) of a seat and at least one upper rod intended to slide in a second guide element (14) fixed to the headrest (72), the said rods being provided with transverse notches distributed over their length to stabilise certain positions of the support relative to the seat back and of the headrest relative to the support by co-operation with elastic indexing elements (24) mounted on the first and second guide elements, characterised in that a first one of the said rods (18) comprises a first low position notch (26) and a first high position notch (28) separated by a substantially smooth portion (30), the first low position notch being closer to the second of the said rods than the first high position notch, the first low position notch (26) having, on the side facing the first high position notch, a flank (38) inclined by a first angle (α1) relative to the direction of the first rod, and the first high position notch (28) having, on the side remote from the first low position notch, an abrupt flank (40) forming an abutment and, on the side facing the first low position notch, a flank (42) inclined by a second angle (α2) relative to the direction of the first rod, in that the second rod (20) comprises a second low position notch (46) and a second high position notch (48), the second low position notch being closer to the first rod than the second high position notch, the second low position notch (46) having, on the side remote from the second high position notch, an abrupt flank (56) forming an abutment and, on the side facing the second high position notch, a flank (58) inclined by a third angle (α3) relative to the direction of the second rod, and the second high position notch (48) having, on the side remote from the second low position notch, an abrupt flank (60) forming an abutment and, on the side facing the second low position notch, a flank (62) inclined by a fourth angle (α4) relative to the direction of the second rod, in that the said third angle (α3) is larger than the said first angle (α1), and in that the said fourth angle (α4) is smaller than the said second angle (α2).

9. A headrest support according to claim 8, characterised in that the second rod (20) comprises at least one intermediate notch (50) between the second low position notch (46) and the second high position notch (48), and in that each intermediate notch (50) has, on the side facing the second low position notch, a flank (64) inclined by a fifth angle (α5) smaller than the said second angle (α2) relative to the direction of the second rod.

10. A headrest support according to claim 9, characterised in that each intermediate rod (50) has, on the side facing the second high position notch (48), a flank (66) inclined by a sixth angle (α6) smaller than the said third angle (α3) relative to the direction of the second rod (20).

## Patentansprüche

1. Höhenverstelleinrichtung für eine Kopfstütze (72) über der Rückenlehne (34) eines Sitzes, umfassend:
wenigstens eine Kopfstützenhalterung (12), die in Bezug auf die Rückenlehne (34) zwischen einer unteren und einer oberen Position verschiebbar ist, wobei die Kopfstütze selbst in Bezug auf die Halterung (12) zwischen einer unteren und einer oberen Position verschiebbar ist, elastische Positionierungsmittel (24, 26, 28, 46, 48, 50), die zur Stabilisation bestimmter Positionen der Halterung in Bezug auf die Rückenlehne und der Kopfstütze in Bezug auf die Halterung vorgesehen sind, **dadurch gekennzeichnet, daß** die Positionierungsmittel derart ausgebildet sind, daß die Halterung (12) keine stabilisierte Position in Bezug auf die Rückenlehne (34) zwischen ihrer unteren Position und ihrer oberen Position aufweist, daß die untere Position der Kopfstütze (72) in Bezug auf die Halterung gegenüber einer Verschiebung nach oben in einer festeren Art und Weise stabilisiert ist als die untere Position der Halterung in Bezug auf die Rückenlehne und daß die obere Position der Halterung in Bezug auf die Rückenlehne gegenüber einer Verschiebung nach unten in einer festeren Art und Weise stabilisiert ist als jede stabilisierte Position der Kopfstütze in Bezug auf die Halterung außer der unteren Position.

2. Einrichtung nach Anspruch 1, **dadurch gekennzeichnet, daß** die Positionierungsmittel (24, 50) wenigstens eine Zwischenposition der Kopfstütze (72) in Bezug auf die Halterung (12) zwischen ihren unteren und oberen Positionen stabilisieren, wobei jede Zwischenposition gegenüber der Verschiebung nach unten auf eine weniger feste Art und Weise stabilisiert ist als die obere Position der Halterung in Bezug auf die Rückenlehne (34).

3. Einrichtung nach Anspruch 2, **dadurch gekennzeichnet, daß** jede Zwischenposition durch die Positionierungsmittel (24, 50) gegenüber der Verschiebung nach oben auf eine weniger feste Art und Weise stabilisiert ist als die untere Position der Kopfstütze (72) in Bezug auf die Halterung (12).

4. Höhenverstelleinrichtung einer Kopfstütze (72) über der Rückenlehne (34) eines Sitzes, umfassend:
wenigstens eine Kopfstützenhalterung (12), die in Bezug auf die Rückenlehne (34) zwischen einer unteren Position und einer oberen Position verschiebbar ist, wobei die Kopfstütze selbst in Bezug auf die Halterung (12) zwischen einer unteren Position und einer oberen Position verschiebbar ist, elastische Positionierungsmittel (24, 26, 28, 46, 48, 50), die zur Stabilisation von bestimmten Positionen der Halterung in Bezug auf die Rückenlehne und der Kopfstütze in Bezug auf die Halterung vorgesehen sind, **dadurch gekennzeichnet, daß** die Positionierungsmittel derart ausgebildet sind, daß die Kopfstütze (72) keine stabilisierte Position in Bezug auf die Halterung (12) zwischen ihrer unteren und ihrer oberen Position aufweist, daß die untere Position der Halterung (12) in Bezug auf die Rückenlehne (34) gegenüber der Verschiebung nach oben auf eine festere Art und Weise stabilisiert ist als die untere Position der Kopfstütze in Bezug auf die Halterung und daß die obere Position der Kopfstütze in Bezug auf die Halterung gegenüber einer Verschiebung nach unten auf eine festere Art und Weise stabilisiert ist als jede stabilisierte Position der Halterung in Bezug auf die Rückenlehne außer der unteren Position.

5. Einrichtung nach Anspruch 4, **dadurch gekennzeichnet, daß** die Positionierungsmittel (24, 50) wenigstens eine Zwischenposition der Halterung (12) in Bezug auf die Rückenlehne (34) zwischen ihren unteren und oberen Positionen stabilisiert, wobei jede Zwischenposition gegenüber der Verschiebung nach unten auf eine weniger feste Art und Weise stabilisiert ist als die obere Position der Kopfstütze (72) in Bezug auf die Halterung.

6. Einrichtung nach Anspruch 5, **dadurch gekennzeichnet, daß** jede Zwischenposition durch die Positionierungsmittel (24, 50) gegenüber der Verschiebung nach oben auf eine weniger feste Art und Weise stabilisiert ist als die untere Position der Halterung (12) in Bezug auf die Rückenlehne (34).

7. Einrichtung nach einem der Ansprüche 1 - 6, **dadurch gekennzeichnet, daß** die Positionierungsmittel einerseits wenigstens ein elastisches Positionierungselement (24) umfassen, das auf einem ersten Führungselement (14) angebracht ist, welches an der Rückenlehne (34) befestigt ist, und mit Kerben zusammenwirkt, die in einer unteren zu der Halterung (12) gehörenden Stange zu der Halterung (12) ausgespart sind und in dem ersten Führungselement verschiebbar sind, sowie andererseits wenigstens ein weiteres elastisches Positionierungselement (24), das auf einem zweiten Führungselement (14) angebracht ist, welches an der Kopfstütze (72) befestigt ist, und mit den Kerben zusammenwirkt, die in einem oberen zu der Halterung gehörenden Stab ausgespart sind und in dem zweiten Führungselement verschiebbar sind.

8. Kopfstützenhalterung (12), umfassend:
wenigstens einen unteren Stab, der zur Verschiebung in einem ersten Führungselement (14) bestimmt ist, das an der Rückenlehne (34) eines Sitzes befestigt ist, und wenigstens einen oberen Stab, der zur Verschiebung in einem zweiten Führungselement (14) bestimmt ist, das an der Kopfstütze (72) befestigt ist, wobei die Stäbe mit quer verlaufenden Kerben versehen sind, die entlang deren Länge verteilt sind, um bestimmte Positionen der Halterung in Bezug auf die Rückenlehne und der Kopfstütze in Bezug auf die Halterung durch das Zusammenwirken mit den elastischen Positionierungselementen (24), die auf den ersten und zweiten Führungselementen angebracht sind, zu stabilisieren, **dadurch gekennzeichnet, daß** ein erster der Stäbe (18) eine erste Kerbe in unterer Position (26) und eine erste Kerbe in oberer Position (28) umfaßt, welche durch einen im wesentlichen glatten Bereich (30) getrennt sind, wobei die erste Kerbe in der unteren Position näher an dem zweiten der Stäbe ist als die erste Kerbe in der oberen Position, wobei die erste Kerbe in der unteren Position (26) auf der Seite, die auf die erste Kerbe in der oberen Position gerichtet ist, eine Flanke (38) aufweist, die einem ersten Winkel (α1) relativ zu der Richtung des ersten Stabes geneigt ist, und die erste Kerbe in der oberen Position (28) auf der Seite , die der ersten Kerbe in der unteren Position gegenüberliegt, eine steile Flanke (40), die einen Anschlag bildet, aufweist sowie auf der Seite, die auf die erste Kerbe in der unteren Position gerichtet ist, eine Flanke (42), die mit einem zweiten Winkel (α2) relativ zu der Richtung des ersten Stabes geneigt ist, **dadurch daß** der zweite Stab (20) eine zweite Kerbe in der unteren Position (46) und eine zweite Kerbe in der oberen Position (48) umfaßt, wobei die zweite Kerbe in der unteren Position näher an dem ersten Stab ist als die zweite Kerbe in der oberen Position, wobei die zweite Kerbe in der unteren Position (46) auf der Seite, die der zweiten Kerbe in der oberen Position gegenüberliegt, eine steile Flanke (56), die einen Anschlag bildet, aufweist sowie auf der Seite, die auf die zweite Kerbe in der oberen Position gerichtet ist, einen Anschlag (58), der mit einem dritten Winkel (α3) relativ zu der Richtung des zweiten Stabes geneigt ist, und die zweite Kerbe in der oberen Position (48) auf der Seite, die der zweiten Kerbe in der unteren Position gegenüberliegt, eine steile Flanke (60), die einen Anschlag bildet, aufweist sowie auf der Seite, die auf die zweite Kerbe in der unteren Position gerichtet ist, eine Flanke (62), die mit einem vierten Winkel (α4) relativ zu der Richtung des zweiten Stabes geneigt ist, **dadurch, daß** der dritte Winkel (α3) größer ist als der erste Winkel (α1), und **dadurch, daß** der vierte Winkel (α4) kleiner ist als der zweite Winkel (α2).

9. Kopfstützenhalterung nach Anspruch 8, **dadurch gekennzeichnet, daß** der zweite Stab (20) wenigstens eine Zwischenkerbe (50) zwischen der zweiten Kerbe in der unteren Position (46) und der zweiten Kerbe in der oberen Position (48) umfaßt, und **dadurch, daß** jede Zwischenkerbe (50) auf der Seite, die auf die zweite Kerbe der unteren Position gerichtet ist, eine Flanke (64) aufweist, die mit einem fünften Winkel (α5) geneigt ist, der Kleiner ist als der zweite Winkel (α2), und zwar relativ zu der Richtung des zweiten Stabes.

10. Kopfstützenhalterung nach Anspruch 9, **dadurch gekennzeichnet, daß** jede Zwischenkerbe (50) auf der Seite, die auf die zweite Kerbe in der oberen Position (48) gerichtet ist, eine Flanke (66) aufweist, die mit einem sechsten Winkel (α6) geneigt ist, der kleiner ist als der dritte Winkel (α3), und zwar relativ zu der Richtung des zweiten Stabes (20).
